# EUROPEAN PATENT APPLICATION

(11) **EP 4 752 625 A1**
(43) Date of publication of application: **03.06.2026**
(21) Application number: 23947682.3
(22) Date of filing: 31.07.2023
(51) Int. Cl.: G02F 1/13357

(54) **DISPLAY DEVICE**

(71) Applicant: LG Electronics Inc., Yeongdeungpo-gu Seoul 07336 (KR)
(72) Inventor: KIM, Hyeongryeol, Seoul 06772 (KR); KIM, Jungwon, Seoul 06772 (KR); KANG, Minhyun, Seoul 06772 (KR); KIM, Hyungu, Seoul 06772 (KR); JANG, Homin, Seoul 06772 (KR)
(74) Representative: Schornack, Oliver
(86) International application number: PCT/KR2023/011144
(87) International publication number: WO 2025/028677

(57) **Abstract**

A display device is disclosed. The display device of the present invention may include: a display panel: a frame disposed behind the display panel; a light source disposed between the display panel and the frame, and providing light to the display panel; an optical unit disposed between the display panel and the light source, and through which light provided from the light source passes; and a supporter mounted to the frame and supporting the optical unit, wherein: the supporter may include: a base facing the front surface of the frame, a tower protruding from the base toward the optical unit, a bar facing the rear surface of the frame and engaged with the frame, and a shaft passing through the frame and connecting the bar and the base; and the frame may include a pressed part protruding from the front surface of the frame toward the base.

## Description

### TECHNICAL FIELD

The present disclosure relates to a display device.

### BACKGROUND ART

As the information society develops, the demand for display devices is also increasing in various forms, and in response to this, various display devices, such as Liquid Crystal Display Device (LCD), Plasma Display Panel (PDP), Electro luminescent Display (ELD), Vacuum Fluorescent Display (VFD), and Organic Light Emitting Diode (OLED), have been studied and used recently.

Among these, the liquid crystal panel of LCD includes a liquid crystal layer, and a TFT substrate and a color filter substrate which are opposite to each other with the liquid crystal layer interposed therebetween, and may display images by using light provided from a backlight unit.

Recently, as the image quality provided by a display device has advanced to high definition, research on a backlight unit that provides high-brightness light to a display panel is being actively conducted.

### DETAILED DESCRIPTION OF INVENTION

### TECHNICAL PROBLEMS

An object of the present disclosure is to solve the aforementioned problems and other problems. Another object may be to provide a display device having an improved luminous efficiency of a backlight unit.

Another object may be to provide a display device capable of improving the structural stability of a backlight unit.

Another object may be to provide a display device capable of improving a space efficiency of a backlight unit.

Another object may be to provide a display device capable of improving an image quality.

### TECHNICAL SOLUTION

According to an aspect of the present disclosure for achieving the above or other object, a display device includes: a display panel; a frame which is disposed at a rear of the display panel; a light source which is disposed between the display panel and the frame, and which provides light to the display panel; an optical unit which is disposed between the display panel and the light source, and through which light provided from the light source passes; and a supporter which is mounted to the frame, and which supports the optical unit, in which the supporter includes: a base which faces a front surface of the frame; a tower which protrudes from the base toward the optical unit; a bar which faces a rear surface of the frame and is engaged with the frame; and a shaft which passes through the frame, and which connects the bar to the base, in which the frame includes a pressed part which protrudes from the front surface of the frame toward the base.

In addition, according to another aspect of the present disclosure, the pressed part may come in contact with a rear surface of the base, and supports the base.

In addition, according to another aspect of the present disclosure, the frame may include: a shaft hole through which the shaft passes; and a bar slot which extends from the shaft hole and which has a shape corresponding to the bar, and the supporter may be mounted to the frame by rotating the bar after the bar passes through the bar slot.

In addition, according to another aspect of the present disclosure, the support may include: a first pressed part supporting a first portion of a rear surface of the base; and a second pressed part supporting a second portion of the rear surface of the base, in which the first pressed part, the shaft hole, and the second pressed part may be sequentially arranged in a direction intersecting with an extension direction of the bar slot.

In addition, according to another aspect of the present disclosure, the frame may further include a stopper which protrudes from the rear surface of the frame in a direction opposite to the pressed part, and which is positioned on a rotational trajectory of the bar.

In addition, according to another aspect of the present disclosure, the base may have a shape symmetrical with respect to the bar slot, and may cover the first pressed part and the second pressed part, and the stopper may be positioned between the bar slot and the second pressed part in the rotational direction of the bar.

In addition, according to another aspect of the present disclosure, a portion of an edge of the first pressed part adjacent to the bar slot may extend parallel to the bar slot.

In addition, according to another aspect of the present disclosure, the frame may include a fixing hole which is positioned between the bar slot and the first pressed part or the second pressed part in a rotational direction of the supporter and to which the bar is engaged, and the first pressed part and the second pressed part may extend along a direction in which the fixing hole and the shaft hole are spaced apart from each other.

In addition, according to another aspect of the present disclosure, the supporter may include a protrusion which protrudes from a side surface of the base, and which is positioned on the pressed part.

In addition, according to another aspect of the present disclosure, the shaft and the protrusion may be aligned in a direction perpendicular to a length direction of the body.

In addition, according to another aspect of the present disclosure, the frame may include a shaft hole through which the shaft passes, and which is covered by the base, and the supporter may further include a reflection board which is arranged on a front surface of the base and which reflects light.

In addition, according to another aspect of the present disclosure, the display device may further includes a reflection sheet which is provided on the front surface of the frame, and which includes a through hole through which the shaft passes, and the through hole may be opposite to the reflection board with respect to the base.

### EFFECT OF INVENTION

The effects of the display device according to the present disclosure are described as follows.

According to at least one of embodiments of the present disclosure, there may be provided a display device having an improved luminous efficiency of a backlight unit

According to at least one embodiment of the present disclosure, there may be provided a display device capable of improving a space efficiency of a backlight unit.

According to at least one embodiment of the present disclosure, there may be provided a display device capable of improving an image quality.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### BRIEF DESCRIPTION OF THE DRAWING

FIGS. 1 to 6 are drawings illustrating examples of a display device related to the present disclosure.

FIGS. 7 to 14 are drawings illustrating examples of a display device according to an embodiment of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function. In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

Hereinafter, a liquid crystal display device (LCD) is used as an example for a display panel, but the display panel applicable to the present disclosure is not limited to the liquid crystal panel, and may also be a field emission display (FED) or an organic light emitting diode (OLED).

In addition, hereinafter, the display device 100 may include a first long side LS1, a second long side LS2 opposite to the first long side LS1, a first short side SS1 adjacent to the first long side LS1 and the second long side LS2, and a second short side SS2 opposite to the first short side SS1.

Here, a first short side area SS1 may be referred to as a first side area, a second short side area SS2 may be referred to as a second side area opposite to the first side area, a first long side area LS1 may be referred to as a third side area which is adjacent to the first side area and the second side area and positioned between the first side area and the second side area, and a second long side area LS2 may be referred to as a fourth side area which is adjacent to the first side area and the second side area, and positioned between the first side area and the second side area and opposite to the third side area.

In addition, for the convenience of explanation, it is illustrated and described that the lengths of the first and second long sides LS1, LS2 are longer than the lengths of the first and second short sides SS1, SS2, but it may also be possible that the lengths of the first and second long sides LS1, LS2 are approximately the same as the lengths of the first and second short sides SS1, SS2.

In addition, hereinafter, a first direction DR1 may be a direction parallel to the long sides LS1, LS2 of the display device 100, and a second direction DR2 may be a direction parallel to the short sides SS1, SS2 of the display device 100. A third direction DR3 may be a direction perpendicular to the first direction DR1 and/or the second direction DR2.

The first direction DR1 and the second direction DR2 may be collectively referred to as a horizontal direction. In addition, the third direction DR3 may be referred to as a vertical direction.

The side of the display device 100 on which an image is displayed may be referred to as a front, or a front surface or front side. When the display device 100 displays an image, the side from which an image cannot be observed may be referred to as a rear or back, or a rear surface or rear side or back surface or back side. When viewing the display device 100 from a front or a front surface, the first long side LS1 side may be referred to as a top, or a top surface or upper surface or upper side. The second long side LS2 side may be referred to as a bottom, or a bottom surface or lower surface or lower side. The first short side SS1 side may be referred to as a right, or a right surface or right side, and the second short side SS2 side may be referred to as a left, or a left surface or left side.

The first long side LS1, the second long side LS2, the first short side SS1, and the second short side SS2 may be referred to as an edge of the display device 100. In addition, the point where the first long side LS1, the second long side LS2, the first short side SS1, and the second short side SS2 meet each other may be referred to as a corner. For example, the point where the first long side LS1 and the first short side SS1 meet may be a first corner C1, the point where the first long side LS1 and the second short side SS2 meet may be a second corner C2, the point where the second short side SS2 and the second long side LS2 meet may be a third corner C3, and the point where the second long side LS2 and the first short side SS1 meet may be a fourth corner C4.

Here, the direction from the first short side SS1 toward the second short side SS2 or the direction from the second short side SS2 toward the first short side SS1 may be referred to as a left and right direction (LR). The direction from the first long side LS1 toward the second long side LS2 or the direction from the second long side LS2 toward the first long side LS1 may be referred to as an up and down direction (UD).

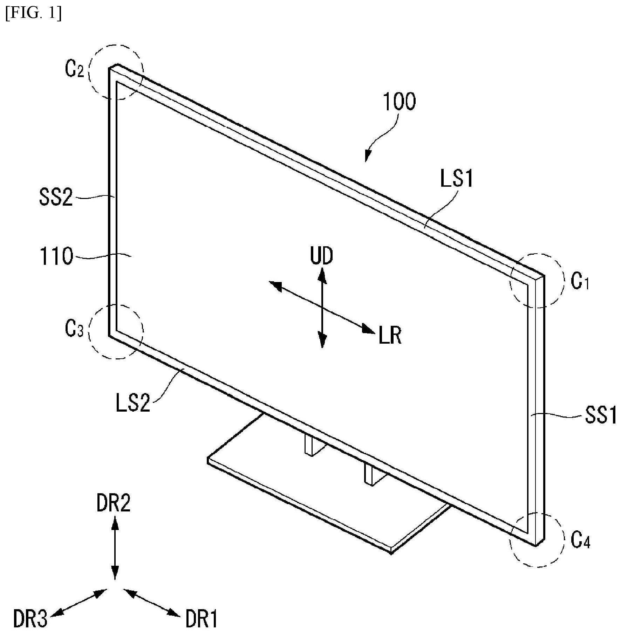

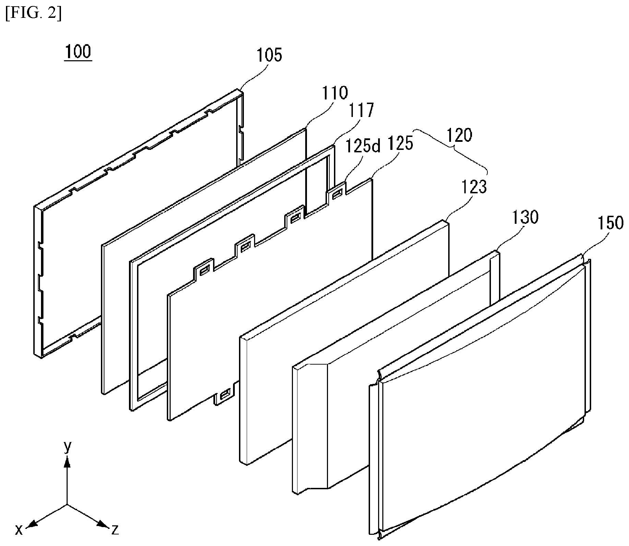

Referring to FIGS. 1 and 2, a display panel 110 is positioned at a front of a display device 100 and may display an image. The display panel 110 includes a plurality of pixels, and may output an image by adjusting the color, brightness, and saturation for each pixel.

The display panel 110 may be divided into an active area that displays an image and an inactive area that does not display an image. The display panel 110 may include a front substrate and a rear substrate that are opposite to each other with a liquid crystal layer interposed therebetween.

The front substrate may include a plurality of pixels composed of red R, green G, and blue B sub-pixels. The front substrate may generate a color corresponding to red, green, or blue according to a control signal.

The rear substrate may include switching elements. The rear substrate may switch a pixel electrode. For example, the pixel electrode may change the molecular arrangement of the liquid crystal layer in response to an externally applied control signal. The liquid crystal layer may include a plurality of liquid crystal molecules. The liquid crystal molecules may change their arrangement in response to a voltage difference generated between the pixel electrode and a common electrode. The liquid crystal layer may transmit light provided by the backlight unit 120 to a front substrate.

The front cover 105 may cover at least a portion of the front and side surfaces of the display panel 110. The front cover 105 may have a rectangular frame shape with an empty center.

The front cover 105 may be divided into a front cover and a side cover. That is, it may be divided into the front cover that is positioned on the front surface of the display panel 110, and the side cover that is positioned on the side surface of the display panel 110. The front cover and the side cover may be configured separately. Either the front cover or the side cover may be omitted. For example, for purposes of aesthetic design, etc, it may be possible to have only side covers without a front cover.

The guide panel 117 may be positioned at the rear of the display panel 110. The guide panel 117 may support a portion of the rear surface of the display panel 110. The guide panel 117 may be in contact with the outer edge of the display panel 110. The guide panel 117 may be coupled to a frame 130.

The backlight unit 120 may be positioned at the rear of the display panel 110. The backlight unit 120 may include multiple light sources. The backlight unit 120 may be a direct type or an edge type. In the case of an edge type backlight unit 120, a light guide part or a light guide panel (LGP) may be further included.

The backlight unit 120 may be positioned on the front surface of the frame 130. For example, this means that multiple light sources may be disposed on the front surface of the frame 130, which may be collectively referred to as a direct-type backlight unit.

The backlight unit 120 may be driven by a full driving method or a partial driving method such as local dimming or impulsive driving. The backlight unit 120 may include an optical sheet 125 and an optical layer 123.

The optical sheet 125 may disperse light from a light source. The optical sheet 125 may be composed of multiple layers. For example, the optical sheet 125 may include at least one prism sheet and/or at least one diffusion sheet.

The optical sheet 125 may have at least one coupling portion 125d. The coupling portion 125d may be coupled to the front cover 105, the frame 130, and/or the back cover 150. That is, the coupling portion 125d may be directly coupled to the front cover 105, the frame 130, and/or the back cover 150. Alternatively, the coupling portion 125d may be coupled to a structure coupled to the front cover 105, the frame 130, and/or the back cover 150. That is, the coupling portion 125d may be indirectly coupled to the front cover 105, the frame 130, and/or the back cover 150.

The optical layer 123 may include a light source, etc. The specific details of the optical layer 123 will be described in a relevant section.

The frame 130 may support components of the display device 100. For example, the backlight unit 120, etc., may be coupled to the frame 130. The frame 130 may be made of a metal material such as an aluminum alloy.

The back cover 150 may be positioned at a rear of the display device 100. The back cover 150 may protect the internal components from the outside. At least a portion of the back cover 150 may be coupled to the frame 130 and/or the front cover 105. The back cover 150 may be an injection-molded resin material.

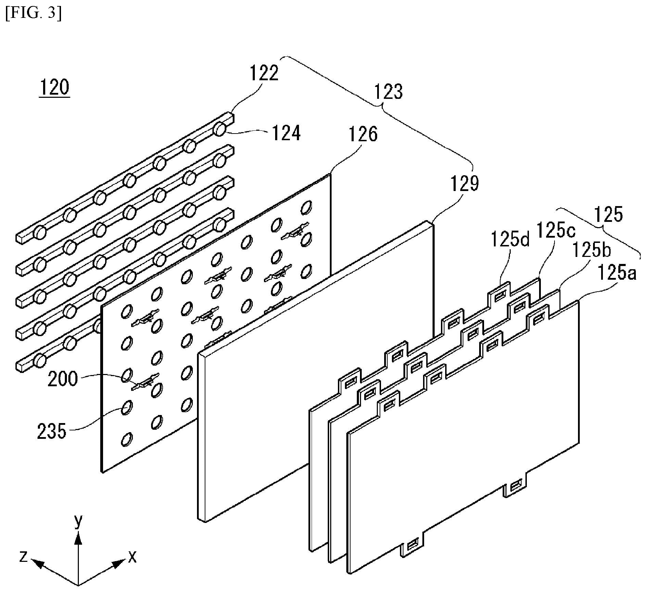

Referring to FIG. 3, the backlight unit 120 may include a substrate 122, at least one optical assembly 124, an optical layer 123 including a reflection sheet 126 and a diffusion plate 129, and an optical sheet 125 positioned in front of the optical layer 123. The configuration of the backlight unit 120 is not limited thereto, and one or more of these may be omitted.

The substrate 122 may be configured in the form of a plurality of straps that extend in a first direction and are spaced apart at a certain interval in a second direction perpendicular to the first direction.

At least one optical assembly 124 may be mounted on the substrate 122. An electrode pattern for connecting an adapter and the optical assembly 124 may be formed on the substrate 122. For example, the electrode pattern may be formed as a carbon nanotube (CNT) electrode pattern.

The substrate 122 may be composed of at least one of polyethylene terephthalate (PET), glass, polycarbonate (PC), and silicon. The substrate 122 may be a printed circuit board (PCB).

The optical assembly 124 may be arranged on the substrate 122 at a certain interval in the first direction. The diameter of the optical assembly 124 may be greater than the width of the substrate 122. That is, the diameter of the optical assembly 124 may be greater than the length of the substrate 122 in the second direction.

The optical assembly 124 may be a light emitting diode (LED) chip or a light emitting diode package including at least one light emitting diode chip.

The optical assembly 124 may be composed of a colored LED that emits at least one color among red, blue, or green, or a white LED. The colored LED may include at least one of a red LED, a blue LED, and a green LED.

The light source included in the optical assembly 124 may be a Chip On Board (COB) type. The COB type may be a form in which an LED chip, which is a light source, is directly coupled to the substrate 122. This may simplify the manufacturing process. Furthermore, it may lower resistance, thereby reducing energy loss as heat. This means that the power efficiency of the optical assembly 124 may be increased. The COB type may provide brighter lighting. The COB type may be thinner and lighter than conventional light sources.

The reflection sheet 126 may be positioned on the front surface of the substrate 122. The reflection sheet 126 may have a through hole 235, and the optical assembly may be inserted into the through hole 235.

The reflection sheet 126 may reflect light provided from the optical assembly 124 forward. In addition, the reflection sheet 126 may reflect the light reflected from the diffusion plate 129 again toward the diffusion plate 129.

The reflection sheet 126 may include at least one of a metal and a metal oxide which are reflective materials. For example, the reflection sheet 126 may include a metal and/or metal oxide having a high reflectivity, such as at least one of aluminum Al, silver Ag, gold Au, and titanium dioxide TiO2.

The reflection sheet 126 may be formed by depositing and/or coating a metal or metal oxide on the substrate 122. Ink containing a metal material may be printed on the reflection sheet 126. A deposition layer using a vacuum deposition method such as thermal deposition, evaporation, or sputtering may be formed on the reflection sheet 126. A coating layer and/or a printed layer using a printing method, gravure coating method, or silk screen method may be formed on the reflection sheet 126.

An air gap may be positioned between the reflection sheet 126 and the diffusion plate 129. The air gap may allow light emitted from the optical assembly 124 to spread widely. To maintain the air gap, a supporter 200 may be positioned between the reflection sheet 126 and the diffusion plate 129. The air gap may be referred to as an optical gap.

A resin may be deposited on the optical assembly 124 and/or the reflection sheet 126. The resin may diffuse the light emitted from the optical assembly 124. The diffusion plate 129 may diffuse the light emitted from the optical assembly 124 upward.

The optical sheet 125 may be positioned in front of the diffusion plate 129. The rear surface of the optical sheet 125 may face the diffusion plate 129, and the front surface of the optical sheet 125 may face the rear surface of the display panel 110. The diffusion plate 129 and the optical sheet 125 may be collectively referred to as an optical unit 129, 125.

The optical sheet 125 may include at least one sheet. Specifically, the optical sheet 125 may include one or more prism sheets and/or one or more diffusion sheets. The plurality of sheets included in the optical sheet 125 may be in an adhesive and/or close contact state.

The optical sheet 125 may be composed of a plurality of sheets having different functions. For example, the optical sheet 125 may include first to third optical sheets 125a to 125c. The first optical sheet 125a may function as a diffusion sheet, and the second and third optical sheets 125b, 125c may function as a prism sheet. The number and/or positions of the diffusion sheets and prism sheets may vary.

The diffusion sheet may prevent the light emitted from the diffusion plate from becoming partially concentrated, thereby enabling a more uniform distribution of light. The prism sheet may collect the light emitted from the diffusion sheet, thereby allowing the light to be vertically incident onto the display panel 110.

The coupling portion 125d may be formed on at least one of one side and edge of the optical sheet 125. The coupling portion 125d may be formed on at least one of the first to third optical sheets 125a to 125c.

The coupling portion 125d may be formed on the long side or edge of the optical sheet 125. The coupling portion 125d formed on the first long side and the coupling portion 125d formed on the second long side may be asymmetric. For example, this means that the positions and/or numbers of the coupling portion 125d on the first long side and the coupling portion 125d on the second long side may be different.

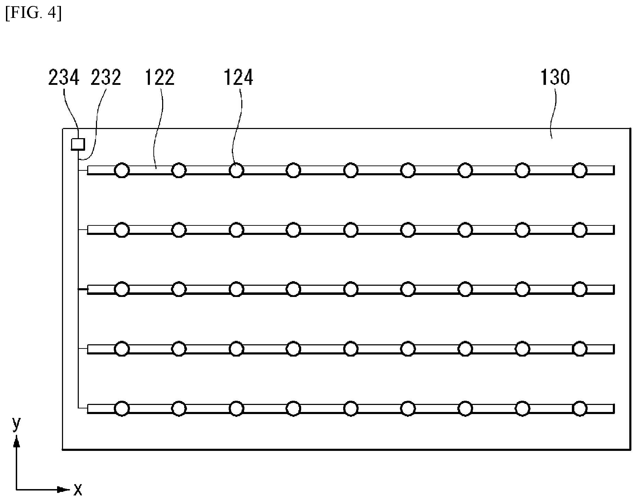

Referring to FIG. 4, the substrate 122 composed of a plurality of straps, which extend in a first direction and are spaced apart at a certain interval in a second direction perpendicular to the first direction, may be provided on the frame 130. One side of the plurality of substrates 122 may be connected to a wiring electrode 232.

A wiring electrode 232 may extend in the second direction. The wiring electrode 232 may be connected to one side of the substrate 122 at a certain interval in the second direction.

A wiring hole 234 may be formed at one distal end of the wiring electrode 232. The wiring hole 234 may be a micro-hole penetrating the frame 130. Through the wiring hole 234, the wiring electrode 232 may extend to the rear surface of the frame 130. Through the wiring hole 234, the wiring electrode 232 may be electrically connected to an adapter (not shown) positioned at the rear surface of the frame 130.

The optical assembly 124 may be mounted on the substrate 122 at a certain interval in the first direction. The diameter of the optical assembly 124 may be greater than the width of the substrate 122 in the second direction.

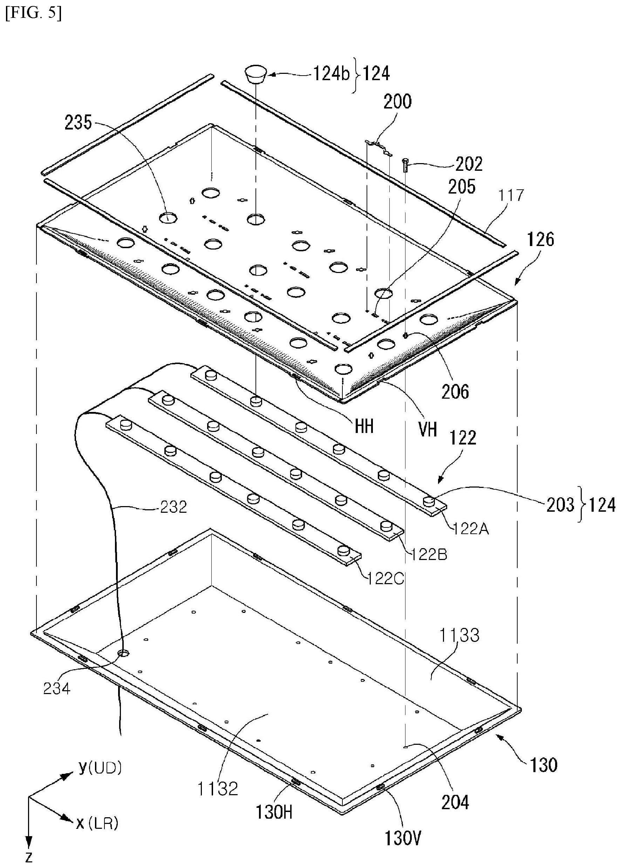

Referring to FIG. 5, the frame 130 may include a flat portion 1132 and an inclined portion 1133. The flat portion 1132 may be plate-shaped. The inclined portion 1133 may have a constant incline from the flat portion 1132 and may extend forward from the flat portion 1132. The frame 130 may have an overall tub shape. The reflection sheet 126 may have an overall tub shape corresponding to the shape of the frame 130. A space may be formed between the inclined portion 1133 and the reflection sheet 126.

The substrate 122 may be mounted or arranged on the flat portion 1132. A plurality of substrates 122 may be sequentially arranged. The plurality of substrates 122 may be spaced apart from each other. For example, the first substrate 122A may be extended in the left and right direction (LR) of the frame 130, and may arrange the length direction of the frame 130 in the left and right direction (LR). The second substrate 122B may be extended in the left and right direction (LR) of the frame 130, and may be mounted on the frame 130 while being spaced apart from the first substrate 122A. The third substrate 122C may be extended in the left and right direction (LR) of the frame 130, and may be mounted on the frame 130 while being spaced apart from the second substrate 122B.

The gap between the substrates 122 may vary depending on the number of pixels of the display panel 110 (see FIG. 2). For example, the gap between the substrates 122 for providing light to the display panel 110 implementing 8K image quality may be smaller than the gap between the substrates 122 for providing light to the display panel 110 implementing 4K image quality. As the number of pixels of the display panel 110 increases or the image quality that the display panel 110 can implement increases, the light transmittance of the display panel 110 may decrease. To this end, a large number of substrates 122 may be arranged to increase the brightness of the light provided by the backlight unit 120 (see FIG. 3).

The reflection sheet 126 may include through holes 235. The number of through holes 235 may correspond to the number of optical assemblies 124. The reflection sheet 126 may be placed on the frame 130 and/or the substrate 122. At this time, the lenses 124b of the plurality of optical assemblies 124 may be inserted into the plurality of through holes 235 and protrude onto the reflection sheet 126. The reflection sheet 126 may be coupled or fixed to the frame 130 by a fixing member 202. The supporter 200 may be mounted on the reflection sheet 126.

Coupling ribs 130H, 130V may be formed on the upper end of the inclined portion 1133 of the frame 130, and the reflection sheet 126 may have a coupling hole (VH, HH) such that the ribs 130H, 130V can be inserted into the coupling hole VH, HH. Accordingly, the reflection sheet 126 may be fixed on the frame 130.

The guide panel 117 is positioned on the outer periphery of the reflection sheet 126, and may be coupled to the frame 130. The guide panel 117 may support the display panel 110 (see FIG. 2). The guide panel 117 may be positioned on the four sides of the reflection sheet 126.

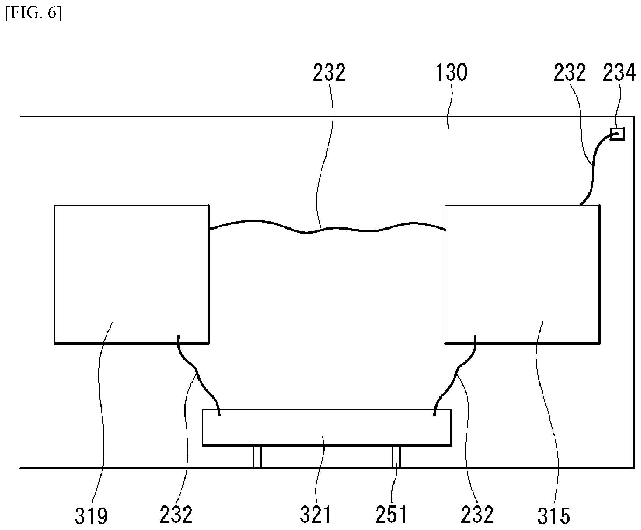

Referring to FIG. 6, the wiring electrode 232 extending from the front surface of the frame 130 through the wiring hole 234 may be electrically connected to a power supply 315. The power supply 315 may be a printed circuit board that supplies power to the display device 100. The power supply 315 may convert AC power into DC power.

The power supply 315 may supply current to the optical assembly 124 through the wiring electrode 232. The power supply 315 may be electrically connected to the main board 321 through the wiring electrode 232. The main board 321 may be spaced apart from the power supply 315 by a certain distance.

The main board 321 may be a printed circuit board that provides an interface for the display device 100 to operate. In addition, the main board 321 may check and manage the operating state of each component of the display device 100.

The main board 321 and the power supply 315 may be electrically connected to a T-CON board 319 through the wiring electrode 232. The T-CON board 319 may be a printed circuit board that transmits power or signals input from the main board 321 or power supply 315 to the display panel 110. The T-CON board 319 may be electrically connected to the display panel 110 on the front surface of the frame 130 through a Flat Flex Cable (FFC cable) 251.

Each printed circuit board is depicted as interconnected, but this is not limited thereto, and at least some of the printed circuit boards may be interconnected.

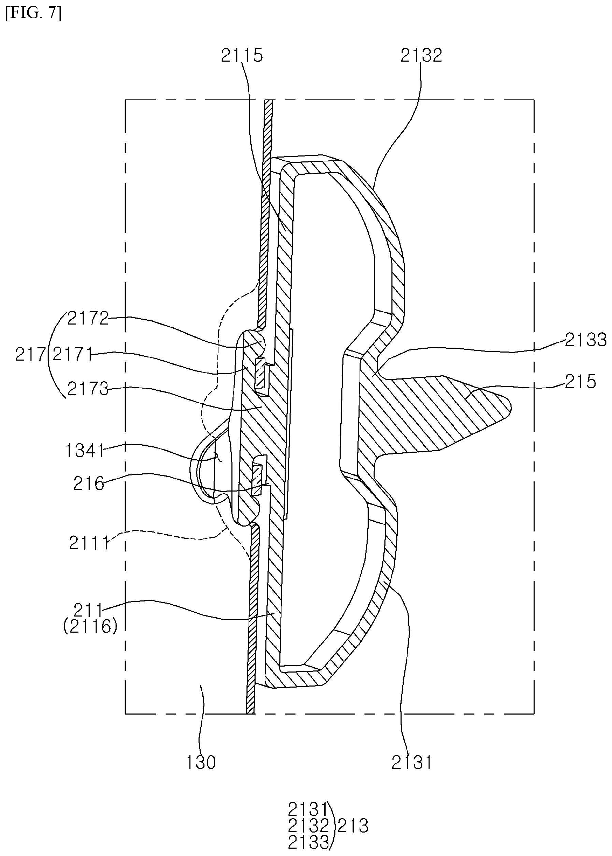

Referring to FIG. 7, the supporter 200 may include a base 211, a bridge 213, a tower 215, a bottom 216, and a fixed bar 217. The base 211 may be an elongated plate.

The base 211 may include a body 2111 and a pair of arms 2116 extending from both sides of the body 2111. The width of the arm 2115, 2116 may be smaller than the width of the body 2111. The opposite ends of the pair of arms 2115, 2116 may be connected by the bridge 213.

The bridge 213 may be spaced apart from the base 211, and may extend from one end of the base 211 to the other end, thereby connecting the opposite ends of the pair of arms 2115, 2116 of the base 211. The bridge 213 may include a first shoulder 2131, a second shoulder 2132, and a loop 2133. The first shoulder 2131 may extend to the upper side of the base 211 in an arch from one end of the first arm 2116 of the base 211. The second shoulder 2132 may extend to the upper side of the base 211 in an arch from the other end of the second arm 2115 of the base 211. A loop 2133 may connect the first shoulder 2131 and the second shoulder 2132.

The distance between the first shoulder 2131 and the base 211 and/or the distance between the second shoulder 2132 and the base 211 may be greater than the distance between the loop 2133 and the base 211. That is, the upper surface of the first shoulder 2131 and/or the upper surface of the second shoulder 2132 may protrude forward more than the upper surface of the loop 2133. The first shoulder 2131, the second shoulder 2132, and/or the loop 2133 may have elasticity.

The tower 215 may extend from the upper surface of the loop 2133. The diameter of the tower 215 may gradually decrease along the extension direction. The tower 215 may have a cylindrical shape. For example, the tower 215 may have elasticity that allows it to bend easily, and rigidity that prevents it from bending.

The bottom 216 may form a step on the lower surface of the base 211. The bottom 216 may be formed on the lower surface of the body 2111 of the base 211. The step formed by the bottom 216 and the lower surface of the base 211 may correspond to the thickness of the reflection sheet 126.

The fixed bar 217 may include a shaft 2173 and a bar 2171. The bar 2171 may extend across the lower surface of the bottom 216, and may be spaced apart from the bottom 216. The shaft 2173 may protrude and extend from the lower surface of the bottom 216 toward the bar 2171.

When light is provided to the display panel 110, the temperature applied to the diffusion plate 129 may increase, and deformation of the diffusion plate 129 may occur. For example, deformation of the diffusion plate 129 may be sagging. When the diffusion plate 129 sags, the supporter 200 may support the diffusion plate 129. The lower surface of the diffusion plate 129 may contact the tower 215 of the supporter 200. Accordingly, deterioration of the image quality of the display device may be prevented.

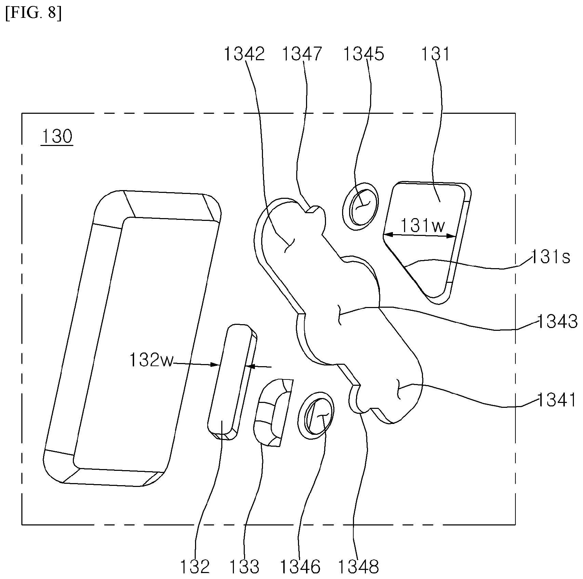

Referring to FIG. 8, a bar slot 1341, 1342, a shaft hole 1343, protrusion holes 1345, 1346, and a ramp 1347, 1348 may be formed on the frame 130.

The bar slot 1341, 1342 may have a shape corresponding to the shape of the bar 2171. The shaft hole 1343 is a hole that accommodates the shaft 2173, and may be positioned between the bar slot 1341, 1342. The bar slot 1341, 1342 may be symmetrical with respect to the shaft hole 1343. The protrusion holes 1345, 1346 may be symmetrical with respect to the shaft hole 1343.

An imaginary straight line connecting the protrusion holes 1345, 1346 and an imaginary straight line connecting the bar slot 1341, 1342 may intersect each other. The protrusion holes 1345, 1346 may be formed at a position spaced apart from the position of each bar slot 1341, 1342 in the rotational direction of the supporter 200. The protrusion hole 1345, 1346 may be referred to as a hooking hole, a fixing hole, etc.

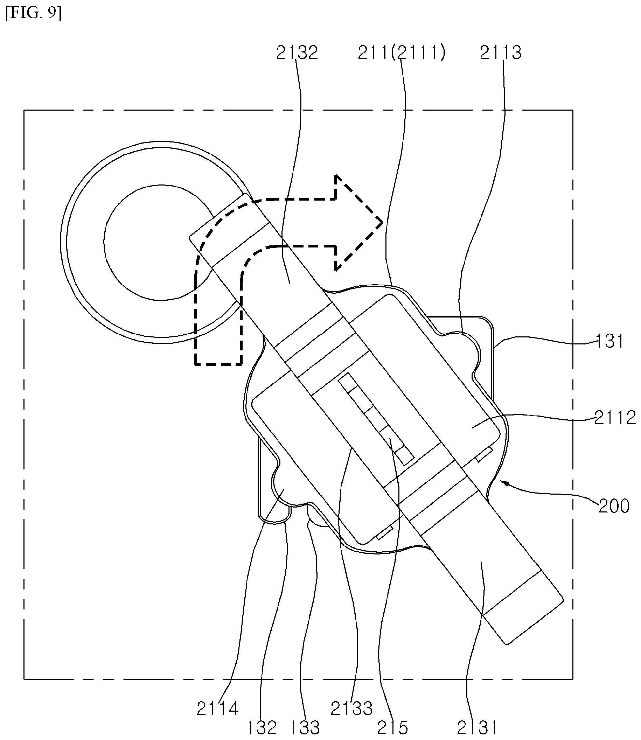

The ramp 1347, 1348 may be formed on one side of the bar slot 1341, 1342. The ramp 1347, 1348 may be symmetrical with respect to the shaft hole 1343. The ramp 1347, 1348 may be positioned on the rotation path of the protrusion 2172. When the fixed bar 217 rotates (see FIG. 9), the protrusion 2172 of the fixed bar 217 may be engaged with the protrusion holes 1345, 1346 through the ramp 1347, 1348.

The frame 130 may be formed with a pressed part 131, 132. The pressed part 131, 132 may protrude toward the base 211 of the supporter 200. The heights at which a first pressed part 131 and a second pressed part 132 protrude from one surface of the frame 130 may be the same or different. The pressed part 131, 132 may be formed by being pressed by using a forming method, and the method of forming the pressed parts 131, 132 is not limited thereto.

The pressed part 131, 132 may protrude forward from the front surface of the frame 130. The rear surface of the frame 130 on which the pressed part 131, 132 is formed may or may not be recessed forward. The pressed part 131, 132 may be referred to as a mound, a support, a protrusion, etc.

The pressed part 131, 132 may include the first pressed part 131 and the second pressed part 132. The first pressed part 131 and the second pressed part 132 may be formed at a position symmetrical with respect to the shaft hole 1343. The first pressed part 131 and the second pressed part 132 may be covered by the base 211. The first pressed part 131 and the second pressed part 132 may be supported by contacting the base 211.

The sizes of the first pressed part 131 and the second pressed part 132 may be different from each other. The sizes of the surfaces formed as the first pressed part 131 and the second pressed part 132 protrude from the frame 130 may be different from each other.

The width 131w of the first pressed part 131 may be greater than the width 132w of the second pressed part 132. The width 131w, 132w of the first pressed part 131 and the second pressed part 132 may be defined in a direction in which the protrusion hole 1346 and a stopper 133 are spaced apart from each other. The direction in which the protrusion hole 1346 and the stopper 133 are spaced apart from each other may be understood as a tangential direction at the protrusion hole 1346 with respect to the shaft hole 1343.

The second pressed part 132 may be positioned adjacent to the stopper 133. The second pressed part 132 may have a smaller size than the first pressed part 131 due to the adjacent stopper 133.

The pressed part 131, 132 may extend along the direction in which the shaft hole 1343 and the protrusion holes 1345, 1346 are spaced apart from each other. A portion 131s of the circumference of the first pressed part 131 adjacent to the bar slot 1341, 1342 may extend along the length direction of the bar slot 1341, 1342. Accordingly, the area in which the base 211 and the pressed part 131, 132 face each other may be maximized.

The stopper 133 may limit the rotation of the supporter 200. The stopper 133 may be formed between the second pressed part 132 and the protrusion hole 1346. The stopper 133 may protrude in the opposite direction to the pressed part 131, 132. When the supporter 200 is mounted on the frame 130, the stopper 133 may contact the side surface of the bar 2171 to limit the rotation of the supporter 200.

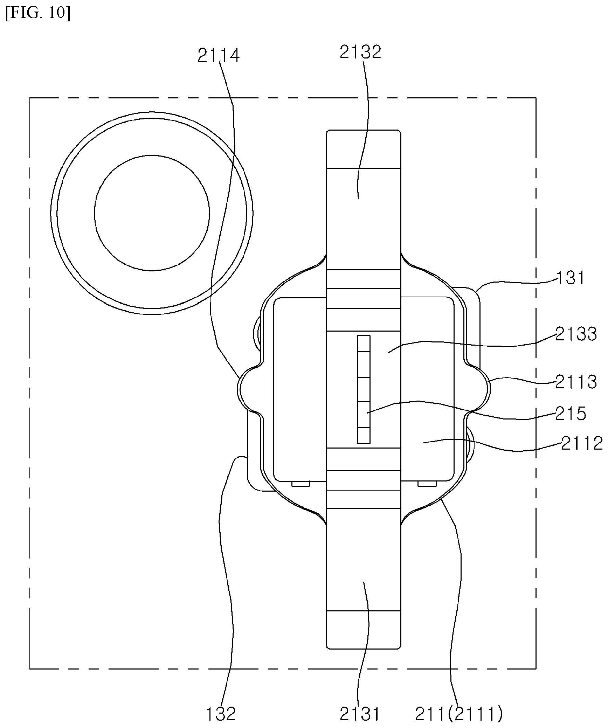

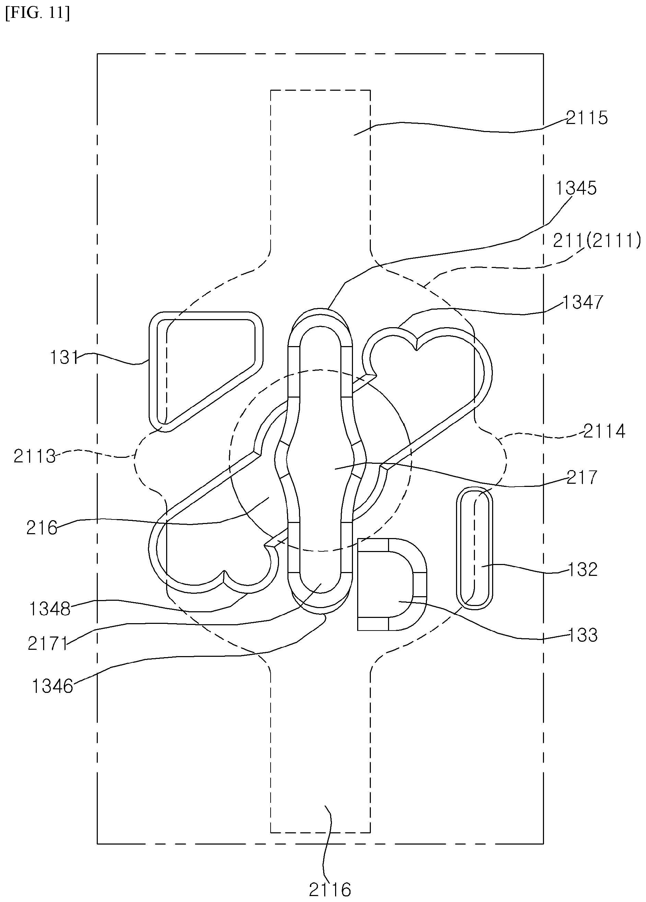

FIGS. 9 and 10 are drawings illustrating the process of mounting the supporter 200 on the frame 130, and FIG. 11 is a drawing showing the supporter 200 mounted on the frame 130 from the opposite side, unlike FIG. 10. Referring to FIGS. 9 and 11, the supporter 200 may be inserted into the frame 130 and rotated to be coupled with the frame 130.

Specifically, the fixed bar 217 of the supporter 200 may be inserted into the bar slot 1341, 1342 and the shaft hole 1343. The inserted supporter 200 may be rotated based on the shaft hole 1343, and the protrusion 2172 formed on the fixed bar 217 may be inserted into the protrusion holes 1345, 1346. Accordingly, the supporter 200 may be firmly coupled to the frame 130.

When the fixed bar 217 of the supporter 200 passes through the bar slot 1341, 1342 and the shaft hole 1343, the first pressed part 131 and the second pressed part 132 may support the body 2111 of the base 211. The first pressed part 131 and the second pressed part 132 may contact the body 2111, or support the body 2111 while being adjacent to the body 2111.

The base 211 may include the protrusion 2113, 2114. The protrusions 2113, 2114 may be supported by the first pressed part 131 and the second pressed part 132, respectively. The contact area between the base 211 and the first pressed part 131 and the second pressed part 132 may be increased by the protrusion 2113, 2114.

The protrusion 2113, 2114 may protrude from the side of the body 2111. The protrusion 2113, 2114 may protrude in a direction intersecting with the length direction of the arm 2115, 2116 of the base 211. For example, the protrusion 2113, 2114 may protrude in a direction perpendicular to the length direction of the arms 2115, 2116.

The supporter 200 may include a reflection board 2112. The reflection board 2112 may be disposed on the body 2111 of the base 211. The reflection board 2112 may reflect light. As an example, the reflection board 2112 may include an opaque material that does not transmit light. As another example, the reflection board 2112 may be white.

The reflection board 2112 may minimize the brightness difference caused by the bar slot 1341, 1342, the shaft hole 1343, and the protrusion holes 1345, 1346. By the reflection board 2112, light may be reflected toward the diffusion plate 129.

When the supporter 200 is formed of a transparent material, the light reflected toward the supporter 200 by the diffusion plate 129 may be transmitted through the supporter 200 and pass through the slot 1341, 1342, the shaft holes 1343, and the protrusion holes 1345, 1346.

Therefore, since the transmitted light is not reflected again toward the diffusion plate 129, a difference in brightness may occur between an area corresponding to the slot 1341, 1342, the shaft hole 1343, and the protrusion holes 1345, 1346 and the surrounding area. The reflection board 2112 may minimize the difference in brightness by covering at least a portion of the area corresponding to the slot 1341, 1342, the shaft hole 1343, and the protrusion holes 1345, 1346.

Meanwhile, the bar slot 1341, the protrusion hole 1346, the stopper 133, and the second pressed part 132 may be arranged along the rotational direction of the supporter 200. In addition, the bar slot 1342, the protrusion hole 1345, and the first pressed part 131 may be arranged along the rotational direction of the supporter 200. Accordingly, the pressed part 131, 132, the stopper 133, the bar slot 1341, 1342, and the protrusion holes 1345, 1346 may be compactly disposed based on the shaft hole 1343.

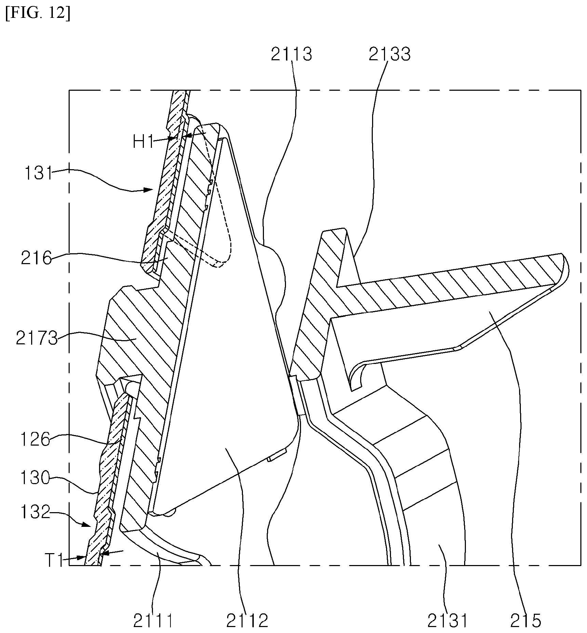

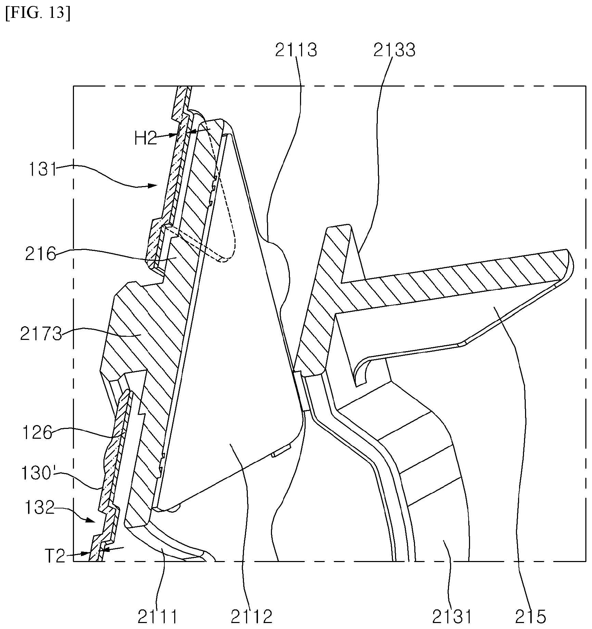

FIGS. 12 and 13 are drawings comparing cases where the thicknesses T1, T2 of the frames 130, 130' are different. FIG. 12 illustrates a case where the thickness T1 of the frame 130 is small, and FIG. 13 illustrates a case where the thickness T2 of the frame 130' is large. Referring to FIGS. 12 and 13, the protruding height H1, H2 of the pressed part 131, 132 from the frame 130, 130' may vary depending on the thickness T1, T2 of the frame 130, 130'.

The protruding height H1, H2 of the pressed part 131, 132 may refer to the height at which the front surface of the pressed part 131, 132 facing the rear surface of the base 211 protrudes from the front surface of the frame 130, 130'. The protruding height H1, H2 may vary during the manufacturing process of the frame 130, 130', and may be determined in consideration of the thickness T1, T2 of the frame 130, 130'.

The sum of the thickness T1 of the frame 130 and the protrusion height H1 of the pressed parts 131, 132 illustrated in FIG. 12 may be identical to the sum of the thickness T2 of the frame 130' and the protrusion height H2 of the pressed parts 131, 132 illustrated in FIG. 13.

Therefore, even if the thickness of the frame 130, 130' varies depending on the type of display device, installation conditions, etc., by manufacturing the protrusion heights of the pressed parts 131, 132 differently, the supporter 200 of the same specification may be utilized for various types of display devices.

Meanwhile, the first pressed part 131 and the second pressed part 132 may protrude in a direction opposite to the bottom 216 of the supporter 200. In addition, the first pressed part 131 and the second pressed part 132 may be spaced apart from the bottom 216 in the radial direction of the shaft 2173. The first pressed part 131 and the second pressed part 132 may support the portion where the bottom 216 is not formed among the rear surface of the body 2111 of the base 211.

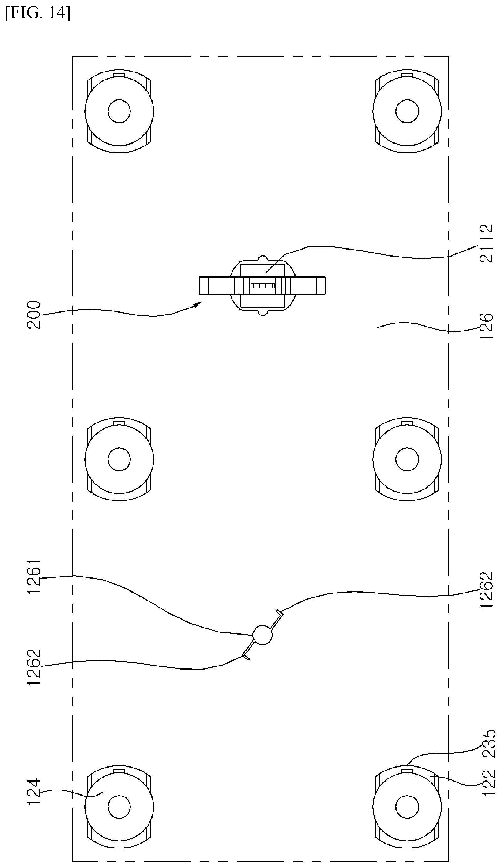

FIG. 14 illustrates the reflection sheet 126 fixed to the frame 130. Referring to FIG. 14, the supporter 200 may be mounted on the frame 130 by penetrating the reflection sheet 126.

The reflection sheet 126 may include a through hole 1261 through which the supporter 200 passes, and a cut slit 1261, 1262. The cut slit 1261, 1262 may be connected to the through hole 1261. The cut slit 1261, 1262 may be formed by cutting into both sides from the through hole 1261. The cut slit 1261, 1262 may be symmetrical with respect to the through hole 1261.

The through hole 1261 may be formed at a position corresponding to the shaft hole 1343 of the frame 130. The cut slit 1261, 1262 may be formed at a position corresponding to the bar slot 1341, 1342 of the frame 130. As the supporter 200 is inserted into the through hole 1261, the peripheral portion of the through hole 1261 is folded toward the frame 130 by the cut slit 1261, 1262, so that the fixed bar 217 of the supporter 200 may be smoothly inserted into the bar slot 1341, 1342 and the shaft hole 1343.

Referring to FIGS. 1 to 14, a display device according to an aspect of the present disclosure may include: a display panel 110; a frame 130 which is disposed at a rear of the display panel 110; a light source 124 which is disposed between the display panel and the frame 130, and which provides light to the display panel 110; an optical unit which is disposed between the display panel 110 and the light source 124, and through which light provided from the light source 124 passes; and a supporter 200 which is mounted to the frame 130, and which supports the optical unit, in which the supporter 200 may include: a base 211 facing a front surface of the frame 130; a tower 215 which protrudes from the base 211 toward the optical unit; a bar 2171, 2172 facing a rear surface of the frame 130 and engaged with the frame 130; and a shaft 2173 which passes through the frame 130, and which connects the bar 2171, 2172 to the base 211, in which the frame 130 may include a pressed part 131, 132 which protrudes from the front surface of the frame 130 toward the base 211.

The pressed part 131, 132 may come in contact with a rear surface of the base 211, and may support the base 211.

The frame 130 may include: a shaft hole 1343 through which the shaft 2173 passes; and a bar slot 1341, 1342 which extends from the shaft hole 1343 and which has a shape corresponding to the bar 2171, 2172, and the supporter 200 may be mounted to the frame 130 by rotating the bar 2171, 2172 after the bar 2171, 2172 passes through the bar slot 1341, 1342.

The pressed part 131, 132 may include: a first pressed part 131 supporting a first portion of a rear surface of the base 211; and a second pressed part 132 supporting a second portion of the rear surface of the base 211, in which the first pressed part 131, the shaft hole 1343, and the second pressed part 132 may be sequentially arranged in a direction intersecting with an extension direction of the bar slot 1341, 1342.

The frame 130 may further include a stopper 133 which protrudes from the rear surface of the frame 130 in a direction opposite to the pressed part 131, 132, and which is positioned on a rotational trajectory of the bar 2171, 2172.

The base 211 may have a shape symmetrical with respect to the bar slot 1341, 1342, and covers the first pressed part 131 and the second pressed part 132, and the stopper 133 may be positioned between the bar slot 1341, 1342 and the second pressed part 132 in the rotational direction of the bar 2171, 2172.

A portion 131s of a circumference of the first pressed part 131 adjacent to the bar slot 1341, 1342 may extend parallel to the bar slot 1341, 1342.

The frame 130 may include a fixing hole 1345, 1346 which is positioned between the bar slot 1341, 1342 and the first pressed part 131 or the second pressed part 132 in a rotational direction of the supporter 200 and to which the bar 2171, 2172 is engaged, and the first pressed part 131 and the second pressed part 132 may extend along a direction in which the fixing hole 1345, 1346 and the shaft hole 1343 are spaced apart from each other.

The supporter 200 may include a protrusion 2113, 2114 which protrudes from a side surface of the base 211, and which is positioned on the pressed part 131, 132.

The shaft 2173 and the protrusion 2113, 2114 may be aligned in a direction perpendicular to a length direction of the base 211.

The frame 130 may include a shaft hole 1343 through which the shaft 2173 passes, and which is covered by the base 211, and the supporter 200 may further include a reflection board 2112 which is arranged on a front surface of the base 211, and which reflects light.

The display device may further include a reflection sheet 126 which is provided on the front surface of the frame 130, and which includes a through hole 1261 through which the shaft passes, and the through hole 2161 may be opposite to the reflection board 2112 with respect to the base 211.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device comprising:
a display panel;
a frame disposed behind the display panel;
a light source disposed between the display panel and the frame, and providing light to the display panel;
an optical unit disposed between the display panel and the light source, and through which light provided from the light source passes; and
a supporter mounted to the frame, and supporting the optical unit,
wherein the supporter comprises:
a base which facing a front surface of the frame;
a tower protruding from the base toward the optical unit;
a bar facing a rear surface of the frame and engaged with the frame; and
a shaft passing through the frame, and connecting the bar and the base,
wherein the frame comprises a pressed part protruding from the front surface of the frame toward the base.

2. The display device of claim 1, wherein the pressed part comes in contact with a rear surface of the base, and supports the base.

3. The display device of claim 1, wherein the frame comprises:
a shaft hole through which the shaft passes; and
a bar slot extending from the shaft hole and having a shape corresponding to the bar,
wherein the supporter is mounted to the frame by rotating the bar after the bar passes through the bar slot.

4. The display device of claim 3, wherein the pressed part comprises:
a first pressed part supporting a first portion of a rear surface of the base; and
a second pressed part supporting a second portion of the rear surface of the base,
wherein the first pressed part, the shaft hole, and the second pressed part are sequentially arranged in a direction intersecting with an extension direction of the bar slot.

5. The display device of claim 4, wherein the frame further comprises a stopper which protrudes from the rear surface of the frame in a direction opposite to the pressed part, and which is positioned on a rotational trajectory of the bar.

6. The display device of claim 5, wherein the base has a shape symmetrical with respect to the bar slot, and covers the first pressed part and the second pressed part, and
the stopper is positioned between the bar slot and the second pressed part in the rotational direction of the bar.

7. The display device of claim 6, wherein a portion of an edge of the first pressed part adjacent to the bar slot extends parallel to the bar slot.

8. The display device of claim 3, wherein the frame comprises a fixing hole which is positioned between the bar slot and the pressed part in a rotational direction of the supporter and to which the bar is engaged, wherein the pressed part extends along a direction in which the fixing hole and the shaft hole are spaced apart from each other.

9. The display device of claim 1, wherein the supporter comprises a protrusion which protrudes from a side surface of the base, and which is positioned on the pressed part.

10. The display device of claim 9, wherein the shaft and the protrusion are aligned in a direction perpendicular to a length direction of the base.

11. The display device of claim 1, wherein the frame comprises a shaft hole through which the shaft passes, and which is covered by the base, and
the supporter further comprises a reflection board which is arranged on a front surface of the base and which reflects light.

12. The display device of claim 11, further comprising a reflection sheet which is provided on the front surface of the frame, and which includes a through hole through which the shaft passes,
wherein the through hole is opposite to the reflection board with respect to the base.
